# EUROPEAN PATENT APPLICATION

(11) **EP 1 780 629 A1**
(43) Date of publication of application: **02.05.2007**
(21) Application number: 06006365.8
(22) Date of filing: 28.03.2006
(51) Int. Cl.: G06F 3/033

(54) **A method and device for associating a user writing with a user-writable element**

(30) Priority: 01.11.2005 US 264880
(71) Applicant: Leapfrog Enterprises, Inc., Emeryville, CA 94608-1070 (US)
(72) Inventor: Marggraff, James, Lafayette, CA 94549 (US)
(74) Representative: Ebner von Eschenbach, Jennifer

(57) **Abstract**

A method and device for associating a user writing with a user-writable element. The method Includes audibly prompting a user to draw a user-writable element on a surface. A user writing Is detected on the surface. A position on the surface of the user writing is recorded. The position is associated with the user-writable element.

## Description

### CROSS-REFERENCE TO RELATED APPLICATION

This Application is a Continuation-in-Part of the co-pending, commonly-owned U.S. Patent Application, Attorney Docket No. 020824-004610US, Application No. 10/803,806, filed March 17, 2004, by James Marggraff et al., entitled "SCANNING APPARATUS," and hereby incorporated by reference herein in its entirety.

This Application is a Continuation-in-Part of the co-pending, commonly-owned U.S. Patent Application, Attorney Docket No. 020824-009500US, Application No. 10/861,243, filed June 3, 2004, by James Marggraff et al., entitled "USER CREATED INTERACTIVE INTERFACE," and hereby incorporated by reference herein in its entirety.

This application is a Continuation-in-Part of the co-pending, commonly-owned U.S. Patent Application, Attorney Docket No. LEAP-P0313, Application No. 111034,491 filed January 12, 2005, by James Marggraff et al., entitled "A METHOD AND SYSTEM FOR IMPLEMENTING A USER INTERFACE FOR A DEVICE EMPLOYING WRITTEN GRAPHICAL ELEMENTS," and hereby incorporated by reference herein in its entirety.

This application is related to co-pending, commonly-owned U.S. Patent Application, Attorney Docket No. LEAP-P0318, Application No. 11/035,155 filed January 12, 2005, by James Marggraff et al., entitled "A METHOD AND SYSTEM FOR IMPLEMENTING A USER INTERFACE FOR A DEVICE THROUGH RECOGNIZED TEXT AND BOUNDED AREAS," and hereby incorporated by reference herein in its entirety.

This application is related to co-pending, commonly-owned U.S. Patent Application, Attorney Docket No. LEAP-P0320, Application No. 11/035,003 filed January 12, 2005, by James Marggraff et al., entitled "TERMINATION EVENTS," and hereby incorporated herein in its entirety.

### FIELD

Embodiments of the present invention relate to the field of interactive devices. More specifically, embodiments of the present invention relate to a pen-based interactive device.

### BACKGROUND

Devices such as optical readers or optical pens conventionally emit light that reflects off a surface to a detector or imager. As the device is moved relative to the surface (or vice versa), successive Images are rapidly captured. By analyzing the images, movement of the optical device relative to the surface can be tracked.

One type of optical pen is used with a sheet of paper on which very small dots are printed. The dots are printed on the page in a pattern with a nominal spacing of about 0.3 millimeters (0.01 inches). The pattern of dots within any region on the page is unique to that region. The optical pen essentially takes a snapshot of the surface, perhaps 100 times a second or more. By interpreting the dot positions captured in each snapshot, the optical pen can precisely determine its position relative to the page.

Applications that utilize information about the position of an optical pen relative to a surface have been or are being devised. An optical pen with Bluetooth or other wireless capability can be linked to other devices and used for sending electronic mail (e-mail) or faxes.

The increasing power of embedded computer systems and the complexity of the functions they are able to implement have created a need for a more intuitive and user-friendly manner of accessing such power. A typical prior art optical pen will implement its intended functionality by the user operating one or more buttons/switches or controls of the optical pen to activate one or more software programs, routines, embedded devices, or the like. The pen may contain or be in communication with a computer system. Upon actuation of such controls, the pen device performs its intended function. Accessing the capabilities of increasingly powerful optical pens through the limited number and configuration of switches, buttons, etc. provided on the pen itself, or any remotely coupled computer system device, is not a satisfactory arrangement.

One prior art solution uses the optical pen to recognize a user-defined command, and uses that command to invoke some function of the pen (e.g.,PCT publication WO/01/48590 A1). For example, a user's writing can be recognized (e.g., in real-time) and interpreted as a command for the optical pen. The drawback with this solution involves the fact that interaction and control of the functions of the pen requires real-time recognition of the user's handwriting (e.g., as the user writes the command down on a sheet of paper). This solution is not satisfactory due to the fact that interaction with more complex functionality of an optical pen requires the user to repeatedly write-down one or more commands to access different choices, options, or functions provided by the pen. Moreover, requiring the recognition of writing is computationally intensive, and may consume substantial power resources. Also, recognition is only applicable for known characters, and is not available for images, drawings, or other unrecognized symbols.

### SUMMARY

Accordingly, a need exists for an interactive device that provides an efficient user interface for associating user writings with user-writable elements. A need also exists for an interactive device that satisfies the above need and audibly prompts the user to draw the user-writable element. A need also exists for an interactive device that satisfies the above needs and does not require the processing or recognition of the user writing.

Various embodiments of the present invention, a method for associating a user writing with a user-writable element, are described herein. A user is audibly prompted to draw a user-writable element on a surface. The user-writable element may include, but is not limited to, a text string, a word, a symbol, a graphic element, an image, or any other user drawn item. In one embodiment, the user is audibly prompted to draw the user-writable element within a particular region of the surface.

A user writing is detected on the surface. Only the presence of a user writing is detected, and the user writing is not processed or recognized. In one embodiment, a user writing is determined as being responsive to the audible prompt if the user writing is the first writing immediately following the audible prompt. A position of the user writing on the surface is recorded. The position is associated with the user-writable element. In one embodiment, in response to detecting interaction with the user writing, an action associated with the user-writable element is executed.

In one embodiment, a second user writing associated with an enter function is recognized on the surface. In one embodiment, the second user writing is a checkmark. In one embodiment, in response to detecting interaction with the second user writing, an enter function associated with the user-writable element is executed.

In another embodiment, the present invention provides an interactive device including a bus, a processor, a memory unit, an audio output device, a writing element, and an optical detector that is operable to implement the described method for associating a user writing with a user-writable element. In another embodiment, the present invention provides a computer-usabie medium having computer-readable program code embodied therein for causing a computer system to perform the described method for associating a user writing with a user-writable element.

Broadly, this writing teaches a method and device for associating a user writing with a user-writable element. The method includes audibly prompting a user to draw a user-writable element on a surface. A user writing is detected on the surface. A position on the surface of the user writing is recorded. The position is associated with the user-writable element.

### BRIEF DESCRIPTION OF THE DRAWINGS

The accompanying drawings, which are incorporated in and form a part of this specification, illustrate embodiments of the invention and, together with the description, serve to explain the principles of the invention:
Figure 1 illustrates an interactive device in accordance with an embodiment of the present Invention.
Figures 2Aand 2B illustrate exemplary user-written selectable items on a sheet of paper, in accordance with embodiments of the present invention.
Figure 3 shows an exemplary sheet of paper provided with a pattern of marks according to one embodiment of the present invention.
Figure 4 shows an enlargement of a pattern of marks on an exemplary sheet of paper according to one embodiment of the present invention.
Figure 5 shows a flowchart of the steps of a process for facilitating interaction with user-drawn selectable items on a surface in accordance with one embodiment of the present invention.
Figure 6 is a block diagram of another device upon which embodiments of the present invention can be implemented.
Figure 7 is a block diagram of another device upon which embodiments of the present invention can be implemented.
Figure 8 shows a flowchart of the steps of a device user interface process in accordance with one embodiment of the present invention.
Figure 9 shows a flowchart of the steps of a hierarchical device user interface process in accordance with one embodiment of the present invention.
Figure 10 shows a menu item tree directory according to an embodiment of the invention.
Figure 11A shows a menu item audible prompting process in accordance with one embodiment of the present invention.
Figure 11B shows a menu item selection process in accordance with one embodiment of the present Invention.
Figure 11C shows a sub-menu items selection process in accordance with one embodiment of the present invention.
Figure 12 shows a plurality of different types of graphical item icons on a surface in accordance with one embodiment of the present invention.
Figures 13A and 13B show a flowchart of a process for associating a user writing with a user-writable element in accordance with one embodiment of the present invention.
Figure 14 illustrates a surface having a number of user writings written thereon in accordance with one embodiment of the present invention.

### DETAILED DESCRIPTION

Reference will now be made in detail to various embodiments of the invention, an interactive device that allows a user to create and interact with selectable items written on a surface, examples of which are illustrated In the accompanying drawings. While the invention will be described in conjunction with these embodiments, it is understood that they are not intended to limit the Invention to these embodiments. On the contrary, the invention is intended to cover alternatives, modifications and equivalents, which may be included within the spirit and scope of the invention as defined by the appended claims. Furthermore, in the following detailed description of the invention, numerous specific details are set forth in order to provide a thorough understanding of the invention. However, it will be recognized by one of ordinary skill in the art that the Invention may be practiced without these specific details. In other Instances, well known methods, procedures, components, and circuits have not been described in detail as not to unnecessarily obscure aspects of the invention.

Some portions of the detailed descriptions, which follow, are presented in terms of procedures, steps, logic blocks, processing, and other symbolic representations of operations on data bits that can be performed on computer memory. These descriptions and representations are the means used by those skilled in the data processing arts to most effectively convey the substance of their work to others skilled in the art. A procedure, computer executed step, logic block, process, etc., is here, and generally, conceived to be a self-consistent sequence of steps or instructions leading to a desired result. The steps are those requiring physical manipulations of physical quantities. Usually, though not necessarily, these quantities take the form of electrical or magnetic signals capable of being stored, transferred, combined, compared, and otherwise manipulated in a computer system. It has proven convenient at times, principally for reasons of common usage, to refer to these signals as bits, values, elements, symbols, characters, terms, numbers, or the like.

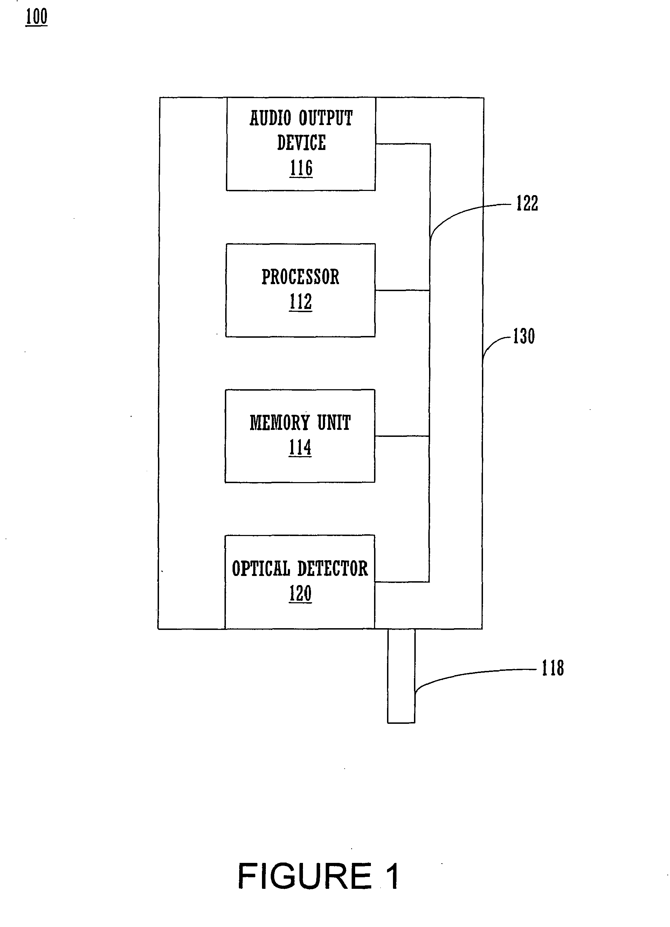

It should be borne in mind, however, that all of these and similar terms are to be associated with the appropriate physical quantities and are merely convenient labels applied to these quantities. Unless specifically stated otherwise as apparent from the following discussions, it is appreciated that throughout the present invention, discussions utilizing terms such as "prompting" or "detecting" or "recording" or "associating" or "processing" or "executing" or "recognizing" or the like, refer to the action and processes of an electronic system (e.g., interactive device 100 of Figure 1), or similar electronic computing device, that manipulates and transforms data represented as physical (electronic) quantities within the electronic device's registers and memories into other data similarly represented as physical quantities within the electronic device memories or registers or other such information storage, transmission or display devices.

### EMBODIMENTS OF THE INVENTION

Various embodiments of the present invention, a method and device for associating a user writing with a user-writable element, are described herein. In one embodiment, the described embodiments are implemented within an interactive device that allows a user to create and interact with selectable items written on a surface. The present invention provides a user with an Interface that replaces an electronic display with any writable surface, such as a piece of paper. The user may create writings items on the surface that execute associated functions and/or represent user-written data, e.g., words, characters, numbers, symbols, etc. The user writings are persistent on the surface, allowing a user to execute actions associated with different user writings throughout operation of the interactive device. In one embodiment, In response to audibly prompting a user to draw a user-writable element on the surface, a user writing is detected without verifying that the user writing is the user writable element. A position of the user writing on the surface is recorded, and the position is associated with the user-writable element. This "prompt and believe" functionality allows the Interactive device to associate user writings with prompted user-writable elements without performing recognition of the user writing.

Figure 1 illustrates an interactive device 100 in accordance with an embodiment of the present Invention. Interactive device 100 includes processor 112, memory unit 114, audio output device 116, writing element 118 and optical detector 120 within housing 130. In one embodiment, processor 112, memory unit 114, audio output device 116 and optical detector 120 are communicatively coupled over bus 122.

In one embodiment, housing 130 is shaped in the form of a stylus or a writing instrument (e.g., pen-like). A user may hold interactive device 100 in a similar manner as a stylus is held. Writing element 118 is located at one end of housing 130 such that a user can place writing element 118 in contact with a writable surface (not shown). Writing element 118 may include a pen, a pencil, a marker, a crayon, or any other marking material. It should be appreciated that writing element 118 may also include a non-marking tip. During use, a user can hold interactive device 100 and use it in a similar manner as a writing instrument to write on a surface, such as paper.

Writing element 118 may be used to create user-written selectable items on the surface. A "user-written selectable item" may include any marking created by the user. If a marking is made on a surface (e.g., a sheet of paper), the user-written selectable item may be a print element. User-written selectable item include, but are not limited to symbols, indicia such as letters and/or numbers, characters, words, shapes, lines, etc. They can be regular or irregular in shape, and they are typically created using the stylus.

Interactive device 100 allows users to create user-written selectable items that represent different functions provided by interactive device 100. In one embodiment, the user-written selectable item includes a symbol representation of an application program executable by processor 112 (e.g., a calculator application or a dictionary application). In another embodiment, the user-written selectable item may Include a navigation item (e.g., a menu), a menu item of an application program executable by said processor, an application option selector, or an instance of data (e.g., a word).

In some embodiments, the user-written selectable item can include a letter or number with a line circumscribing the letter or number. The line circumscribing the letter or number may be a circle, oval, square, polygon, etc. Such user-written selectable items appear to be like "buttons" that can be selected bythe user, instead of ordinary letters and numbers. By creating a user-written selectable item of this kind, the user can visually distinguish user-written selectable items such as functional icons from ordinary letters and numbers. Also, by creating user-written selectable items of this kind, interactive device 100 may also be able to better distinguish functional or menu item type user-written selectable items from non-functional or non-menu item type user-written items. For instance, a user may create a user-written selectable item that is the tetter "M" which has a circle around it to create an interactive "menu" icon. The interactive device 100 maybe programmed to recognize an overlapping circle or square with the letter "M" in it as a functional user-written selectable item as distinguished from the letter "M" in a word. Computer code for recognizing such functional user-written selectable items and distinguishing them from other non-functional user-written items can reside in memory unit 114 in interactive device 100.

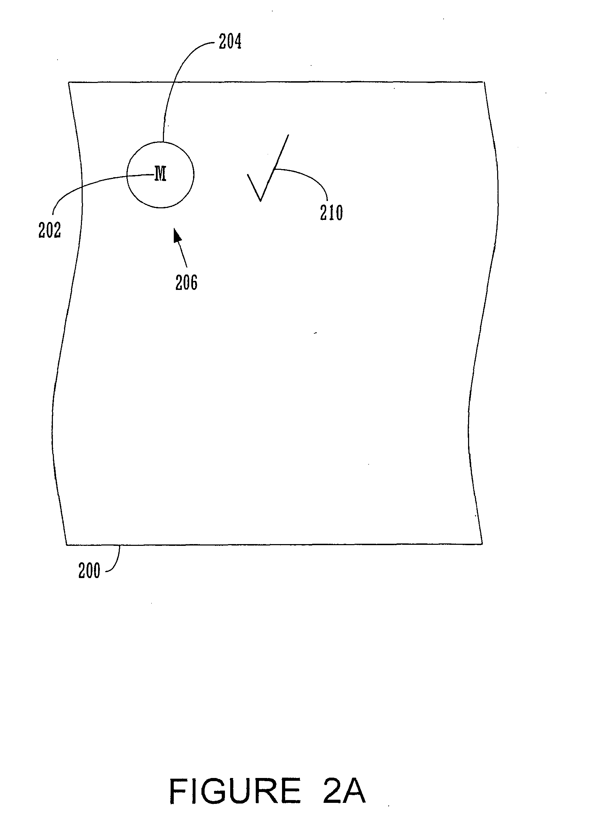

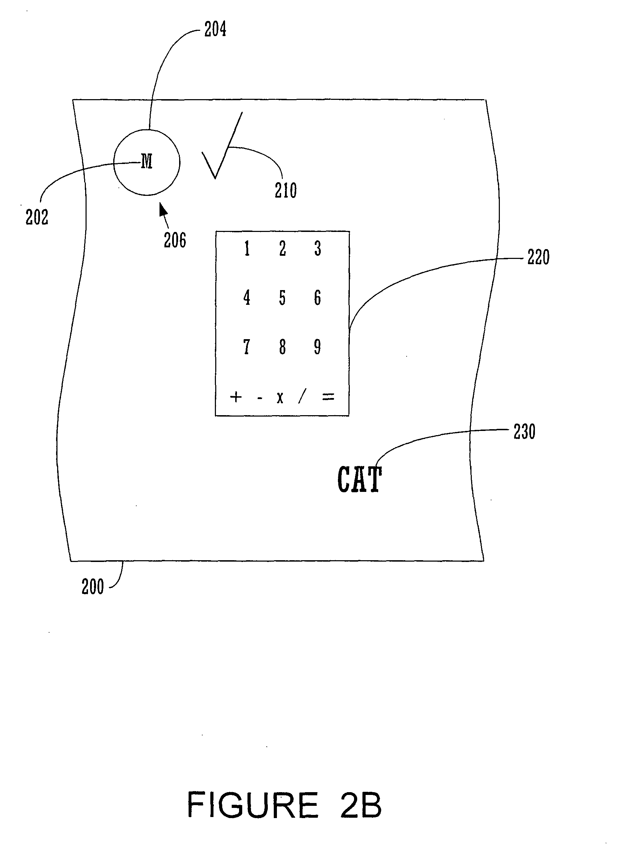

Figures 2Aand 2B illustrate exemplaryuser-written selectable items on a sheet of paper, in accordance with embodiments of the present invention. With reference to Figure 2A, user-written selectable element 206 is the letter "M" 202 with the circle 204 around the letter "M" 202. User-written selectable item 206 is drawn on sheet 200 with a writing element of an interactive device (e.g., writing element 118 of Figure 1).

In one embodiment, user-written selectable item 206 represents a menu function of the interactive device. To indicate a selection of a particular menu item, directory, or subdirectory, a user may create another user-written selectable item or make a gesture with the interactive device 100. For example, if the user wants to proceed down a subdirectory of the menu, the user may then draw a checkmark 210 on sheet 200 to indicate that a selection has been made. After drawing the checkmark, the menu items associated with user-written selectable item 206 maybe audibly rendered by audio output device 116, after each subsequent selection or "down-touch" of the interactive device 100 onto the sheet 200 near user-written selectable item 206. Interaction with the checkmark 210 then selects the last option that was audibly rendered. For example, a "calculator" function could then be selected after the user hears the word "calculator" recited to change the mode of operation of the interactive device 100 to the calculator function

Figure 2B shows how a user can create a paper calculator on a blank portion of sheet 200. In this example, after the user has selected the "calculator" function as described above, interactive device 100 audibly prompts the user to write down the numbers 0-9 and the operators +, -, x, /, and =. For example, a user maybe prompted to create the user-written selectable items 220 Including numbers and mathematical operators for operations such as addition, subtraction, multiplication, division, and equals. These are hard drawn on the surface. Interactive device 100 recognizes the positions of the created graphic elements and recognizes the actual user-written selectable items created. A user can then select at least two user-written selectable items to receive an audio output related to the selection of those at least two graphic elements. For example, the user may select sequence of graphic elements "4" "+" "7" "=" to hear the interactive apparatus 100 recite the result "eleven."

The menu represented by user-written selectable item 206 and the paper calculator represented byuser-written selectable item 220 can be reused at a later time, since interactive device 100 has stored the locations of the user-written selectable items in memory unit 114. Also, an interaction of the pen with user-written selectable item 220 will automatically invoke the calculator function.

Figure 2B also includes data 230. In the example shown in Figure 2B, data 230 is the word "CAT". It should be appreciated that data 230 can be any information (e.g., alphanumeric symbol, image, drawing, marking, etc.) that maybe used by an application operating on interactive device 100. When written, the text string, CAT, is automatically recognized as the word cat. Its location on the surface is also recorded. Interaction of interactive device 100 with this text string automatically recalls the identified word CAT.

Optical detector 120 is atone end of the stylus-shaped interactive device 100. Optical detector 120 is operable to detect information on the surface. For example, optical detector 120 may comprise a charge coupled device. In one embodiment, interactive device also comprises an optical emitter for illuminating a portion of the surface that is detected by optical detector 120. The information detected by optical detector 120 is transmitted to processor 112.

Processor 112 may include any suitable electronics to implement the functions of the interactive device 100. Processor 112 can recognize the user-written selectable items and can identify the locations of those user-written selectable items so that interactive device 100 can perform various operations. In these embodiments, memory unit 114 may comprise computer code for correlating any user-written selectable items produced bythe user with their locations on the surface.

Memory unit 114 comprises computer code for performing any of the functions of the interactive device 100. In one embodiment, wherein computer code stored in memory unit 114 and implemented on processor 112 is responsive to a user selection of a user-written selectable item and operable to execute a function associated with the user-written selectable item.in response to the selection. In another embodiment, computer code stored in memory unit 114 and Implemented on processor 112 is operable to direct audio output device 116 to audibly render a listing of potential user-written selectable items, wherein processor 112 is operable to detect that a user has written a plurality of user-written selectable items, and wherein processor 112 responsive to a user selection of one or more user-written selectable items of the plurality of user-written selectable items Is operable to execute a different function associated with each of the selected user-written selectable items.

In one embodiment, processor 112 is operable to automatically identify a user-written selectable item in response to a selection using symbol recognition or character recognition. In another embodiment, processor 112 is operable to automatically record a surface location of a user-written selectable item on the surface when it is written. Processor 112 is operable to automatically identify the user-written selectable item in response to a user selection based on a detected surface location of the user-written selectable item.

In one embodiment, the present invention provides an operating system of interactive device 100. The operating system is operable to detect a user-written selectable item on a surface, associate the user-written selectable item with a function, and, responsive to a user interaction with the user-written selectable item, executing the associated function.

In other embodiments, memoryunit 114 may comprise computer code for recognizing printed characters, computer code for recognizing a user's handwriting and interpreting the user's handwriting (*e.g*., handwriting character recognition software), computer code for correlating positions on an article with respective print elements, code for converting text to speech (*e.g*., a text to speech engine), computer code for reciting menu items, computer code for performing translations of language (English-to-foreign language dictionaries), etc. Software for converting text to speech is commercially available from a number of different vendors.

Memory unit 114 may also comprise code for audio and visual outputs. For example, code for sound effects, code for saying words, code for lesson plans and instruction, code for questions, etc. may all be stored in memory unit 114, Code for audio outputs such as these may be stored in a non-volatile memory (in a permanent or semi-permanent manner so that the data is retained even if the interactive apparatus is turned off), rather than on the article itself. Computer code for these and other functions described in the application can be included in memory unit 114, and can be created using any suitable programming language including C, C++, etc.

Memory unit 114 maybe a removable memoryunitsuch as a ROM or flash memory cartridge. In other embodiments, memory unit 114 may comprise one or more memory units (*e.g.,* RAM, ROM, EEPROM, etc.). Memory unit 114 may comprise any suitable magnetic, electronic, electromagnetic, optical or electro-optical data storage device. For example, one or more semiconductor-based devices can be in memory unit 114.

Audio output device 116 may include a speaker or an audio jack (e.g., and earpiece or headphone jack) for coupling to an earpiece or a headset. In one embodiment, audio output device 116 is operable to audibly render a list of potential user-written selectable items. Audio output device 116 mayalso be operable to audibly render information in response to a user selection of a user-written selectable item.

It should be appreciated that interactive device 100 is also operable to recognize and execute functions associated with pre-printed selectable items on the surface. In one embodiment, responsive to a user selection of a pre-printed selectable item on the surface, processor 112 is operable to execute a function associated with a pre-printed selectable item in response to a user selecting the pre-printed selectable item. In one embodiment, processor 112 is operable to automatically identify a pre-printed selectable using symbol recognition. In another embodiment, processor 112 is operable to automatically identify the pre-printed selectable item based on a detected surface location of the pro-printed selectable item. Moreover, in another embodiment, processor 112 is operable identify an application program based on a particular bounded region of the surface, such that different bounded regions are associated with different application programs.

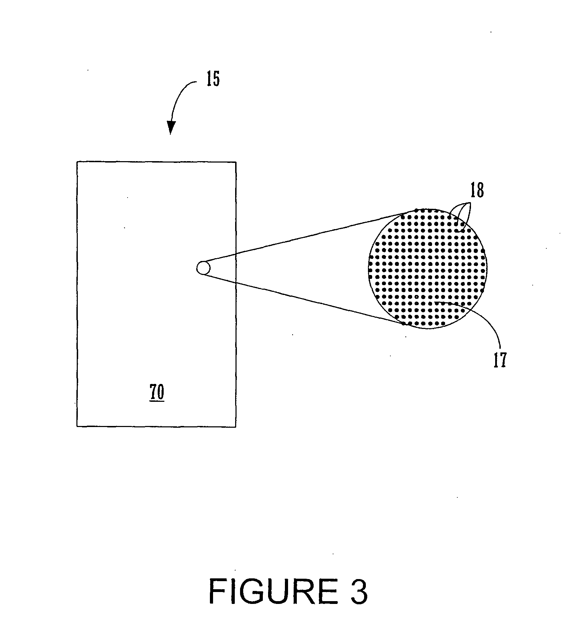

In some embodiments, the surface can be a sheet of paper with or without pre-printed selectable items. Figure 3 shows a sheet of paper 15 provided with a pattern of marks according to one embodiment of the present invention, in the embodiment of Figure 3, sheet of paper 15 is provided with a coding pattern in the form of optically readable position code 17 that consists of a pattern of marks 18. The marks 18 in Figure 3 are greatly enlarged for the sake of clarity. In actuality, the marks 18 may not be easily discernible by the human visual system, and may appear as grayscale on sheet of paper 15. In one embodiment, the marks 18 are embodied as dots; however, the present invention is not so limited.

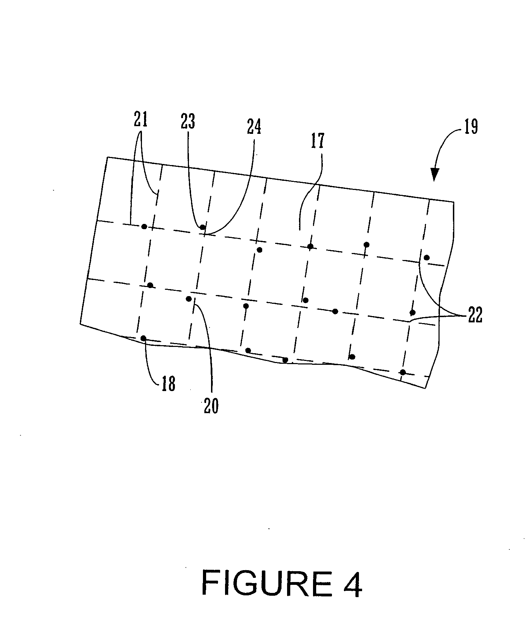

Figure 4 shows an enlarged portion 19 of the position code 17 of Figure 3. An interactive device such as interactive device 100 (Figure 1) is positioned to record an image of a region of the position code 17. In one embodiment, the optical device fits the marks 18 to a reference system in the form of a raster with raster lines 21 that intersect at raster points 22. Each of the marks 18 is associated with a raster point 22. For example, mark 23 is associated with raster point 24. For the marks in an image/raster, the displacement of a mark from the raster point associated with the mark is determined. Using these displacements, the pattern in the image/raster is compared to patterns in the reference system. Each pattern in the reference system is associated with a particular location on the surface 70. Thus, by matching the pattern in the image/raster with a pattern in the reference system, the position of the pattern on the surface 70, and hence the position of the optical device relative to the surface 70, can be determined.

In one embodiment, the pattern of marks on sheet 15 are substantially invisible codes. The codes are "substantially invisible" to the eye of the user and may correspond to the absolute or relative locations of the selectable items on the page. "Substantially invisible" also includes codes that are completely or slightly invisible to the user's eye. For example, if dot codes that are slightly invisible to the eye of a user are printed all over a sheet of paper, the sheet may appear to have a light gray shade when viewed at a normal viewing distance. In some cases, after the user scans the codes with interactive device 100, audio outputdevice 116 in interactive device 100 produces unique audio outputs (as opposed to indiscriminate audio outputs like beeping sounds) corresponding to user-written selectable items that are associated with the codes.

In one embodiment, the substantially invisible codes are embodied by dot patterns. Technologies that read visible or "subliminally" printed dot patterns exist and are commercially available. These printed dot patterns are substantially invisible to the eye of the user so that the codes that are present in the dot patterns are undetectable bythe user's eyes in normal use (unlike normal bar codes). The dot patterns can be embodied by, for example, specific combinations of small and large dots that can represent ones and zeros as in a binary coding. The dot patterns can be printed with ink that is different than the ink that is used to print the print elements, so that interactive device 100 can specifically read the dot patterns.

Anoto, a Swedish company, employs a technology that uses an algorithm to generate a pattern the enables a very large unique data space for non-conflicting use across a large set of documents. Their pattern, if fully printed, would cover 70 trillion 8.5" x 11" pages with unique recognition of any2 cm square on any page. Paper containing the specific dot patterns is commercially available from Anoto. The following patents and patent applications are assigned to Anoto and describe this basic technology and are all herein Incorporated by reference in their entirety for all purposes: U.S. Patent No. 6,502,756, U.S. Application No. 10/179,966, filed on June 26, 2002, WO 01/95559, WO 01/71473, WO 01/75723, WO 01/26032, WO 01/75780, WO 01/01670, WO 01/75773, WO 01/71475, WO 00/73983, and WO 01/16691.

In some embodiments, the dot patterns maybe free of other types of data such as data representing markers for data blocks, audio data, and/or error detection data. As noted above, processor 112 in interactive device 100 can determine the location of the stylus using a lookup table, and audio can be retrieved and played based on the location information. This has advantages. For example, compared to paper that has data for markers, audio, and error detection printed on it, embodiments of the invention need fewer dots, since data for markers, audio, and error detection need not be printed on the paper. By omitting, for example, audio data from a piece of paper, more space on the paper can be rendered interactive, since actual audio data need not occupy space on the paper. In addition, since computer code for audio is stored In interactive device 100 in embodiments of the invention, it is less likely that the audio that is produced will be corrupted or altered by, for example, a crinkle or tear in the sheet of paper.

It should be appreciated that although dot patterned codes are specifically described herein, other types of substantially invisible codes may be used in other embodiments of the invention. For example, infrared bar codes could be used if the bar codes are disposed in an array on an article. Illustratively, a sheet of paper may include a 100 x 100 array of substantially invisible bar codes, each code associated with a different x-y position on the sheet of paper. The relative or absolute locations of the bar codes in the array maybe stored in memory unit 114 in interactive device 100.

As noted, in some embodiments, the substantially invisible codes may directly or indirectly relate to the locations of the pluralityof positions and/or any selectable items on the sheet. In some embodiments, the substantially invisible codes can directly relate to the locations of the plurality of positions on a sheet (or other surface). In these embodiments, the locations of the different positions on the sheet may be provided bythe codes themselves. For example, a first code at a first position may include code for the spatial coordinates (e.g., a particular x-y position) for the first position on the sheet, while a second code at a second position may code for the spatial coordinates of the second position on the sheet

Different user-written selectable items can be at the different positions on the sheet. These user-written selectable items maybe formed over the codes. For example, a first user-written selectable item can be formed at the first position overlapping the first code. A second user-written selectable item can be formed at the second position overlapping the second code. When a user forms the first user-written selectable item, the scanning apparatus recognizes the formed first print element and substantially simultaneously scans the first code that is associated with the formed first user-written selectable item. Processor 112 in interactive device 100 can determine the particular spatial coordinates of the first position and can correlate the first user-written selectable item with the spatial coordinates.

When the user forms the second user-written selectable item, the scanning apparatus recognizes the formed second user-written selectable item and substantially simultaneously scans the second code. Processor 112 can then determine the spatial coordinates of the second position and can correlate the second user-written selectable item with the spatial coordinates. A user can then subsequently select the first and second user-written selectable items using interactive device 100, and interactive device 100 can perform additional operations. For example, using this methodology, a user can create a user-defined interface or a functional device on a blank sheet of paper.

Interactive device 100 may also include a mechanism that maps or correlates relative or absolute locations with the formed user-written selectable items in memoryunit 114. The mechanism can be a lookup table that correlates data related to specific user-written selectable items on the article to particular locations on an article. This lookup table can be stored in memory unit 114. Processor 112 can use the lookup table to identify user-written selectable items at specific locations so that processor 112 can perform subsequent operations.

The surface with the substantially invisible codes can be in any suitable form. For example, the surface maybe a single sheet of paper, a note pad, filler paper, a poster, a placard, a menu, a sticker, a tab, product packaging, a box, a trading card, a magnet (e.g., refrigerator magnets), a white board, a table top, etc. Moreover, surface maybe comprised of any material, including but not limited to paper, wood, metal, plastic, etc. Any of these or other types of surfaces can be used with or without pre-printed selectable items. If the surface is a sheet the sheet can be of any suitable size and can be made of any suitable material. For example, the sheet maybe paper based, or may be a plastic film. In some embodiments, the surface maybe a three-dimensional article with a three-dimensional surface. The three-dimensional surface may include a molded figure ofa human body, animals (e.g., dinosaurs), vehicles, characters, or other figures.

In some embodiments, the surface is a sheet and the sheet maybe free of pre-printed selectable elements such as printed letters or numbers (e.g., markings made before the user creates user-written selectable items on the sheet). In other embodiments, pre-printed selectable items can be on the sheet (e.g., before the user creates user-written selectable items on the sheet). Pre-printed print elements can include numbers, icons, letters, circles, words, symbols, lines, etc. For example, embodiments of the invention can utilize pre-printed forms such as pre-printed order forms or voting ballots.

Interactive device 100 can be in any suitable form, in one embodiment, interactive device 100 is a scanning apparatus that is shaped as a stylus. In one embodiment, interactive device 100 is pocket-sized. The stylus includes a stylus housing that can be made from plastic or metal. A gripping region may be present on the stylus housing.

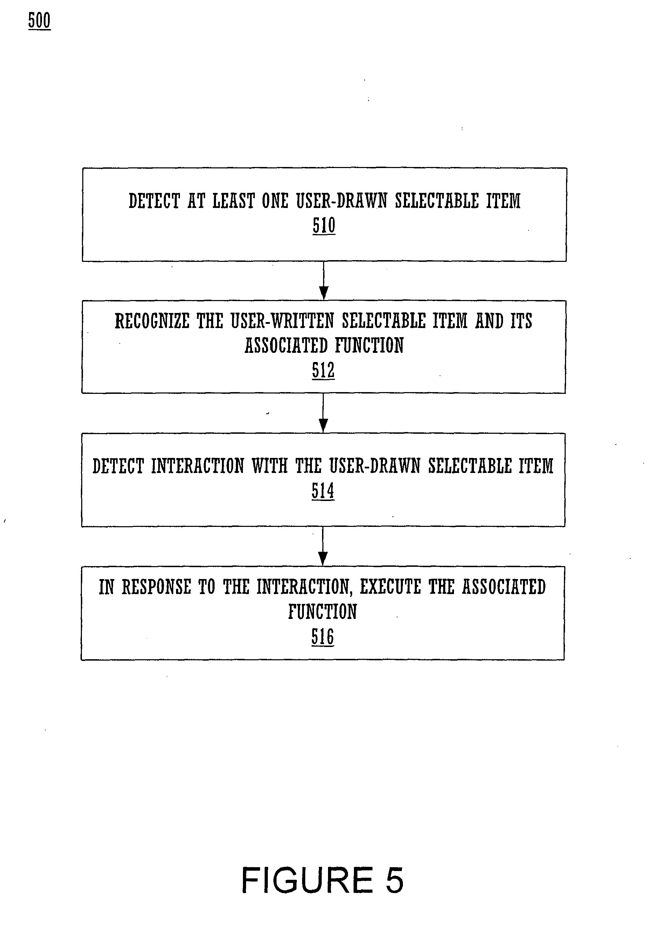

Figure 5 shows a flowchart of the steps of a process 500 for facilitating interaction with user-drawn selectable items on a surface in accordance with one embodiment of the present invention. Process 500 depicts the basic operating steps of a user interface process as implemented by an Interactive device (e.g., interactive device 100) in accordance with one embodiment of the present invention as it interprets user input in the form of user-written selectable items, graphic elements, writing, marks, etc. and provides the requested functionality to the user.

At step 510, where the computer implemented functionality of the device 100 detects a user-written selectable item on a writable surface. At step 512, the user-written selectable item is recognized along with the function of the user-written selectable item. This function can be, for example, a menu function that can enunciate a predetermined list of functions (e.g., menu choices) for subsequent activation by the user. At step 514, interaction with the user-drawn selectable item is detected. The interaction may include writing the user-written selectable item, interacting with the user-written selectable item with the interactive device (e.g., tapping the user-written selectable item), or interacting with a related user-written selectable item (e.g., checkmark 210 of Figure 2B). The function is persistently associated with the user-written selectable item, enabling a subsequent access of the function (e.g., at some later time) by a subsequent interaction (e.g., tapping) of the graphical element icon. For example, in the case of a menu function, the listed menu choices can be subsequently accessed by the user at some later time by simply actuating the menu graphic element icon (e.g., tapping it).

In this manner, embodiments of the present invention implement a user interface means for navigating the functionality of an interactive device (e.g., interactive device 100 of Figure 1) using a pen and paper type interface. The user interface as implemented by the user-written selectable items provides the method of interacting with a number of software applications that execute within interactive device 100. As described above, the input to interactive device 100 includes user actions, such as a user creating a user-written selectable item or a user interacting with a user-written or pre-printed selectable item. The output from the pen is audio output, and thus, the user interface means enables the user to cany on a "dialog" with the applications and functionality of the pen. In other words, the user interface enables the user to create mutually recognized items such as user-written selectable items on a surface that allow the user and the pen to interact with one another. As described above, the mutually recognized items are typically symbols or marks or icons that the user draws on a surface, such as a sheet of paper.

### ADDITIONAL EMBODIMENTS OF THE INVENTION

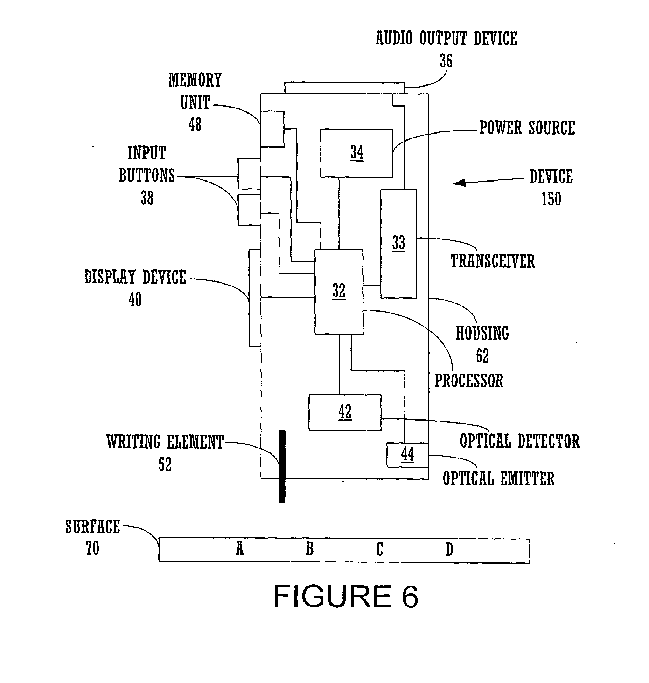

Figure 6 is a block diagram of a pen device 150 upon which other embodiments of the present invention can be implemented. In general, pen device 150 may be referred to as an optical device, more specifically as an optical reader, optical pen or digital pen. The device may contain a computer system and an operating system resident thereon. Application programs may also reside thereon.

In the embodiment of Figure 6, pen device 150 includes a processor 32 inside a housing 62. In one embodiment, housing 62 has the form of a pen or other writing or marking utensil or instrument. Processor 32 is operable for processing information and instructions used to implement the functions of pen device 150, which are described below.

In the present embodiment, the pen device 150 may include an audio output device 36 and a display device 40 coupled to the processor 32. in other embodiments, the audio output device and/or the display device are physically separated from pen device 150, but in communication with pen device 150 through either a wired or wireless connection. For wireless communication, pen device 150 can include a transceiver or transmitter (not shown in Figure 6). The audio output device 36 may include a speaker or an audio jack (e.g., for an earphone or headphone). The display device 40 may be a liquid crystal display (LCD) or some other suitable type of display.

In the embodiment of Figure 6, pen device 150 may include input buttons 38 coupled to the processor 32 for activating and controlling the pen device 150. For example, the input buttons 38 allow a user to input information and commands to pen device 150 or to turn pen device 150 on or off. Pen device 150 also includes a power source 34 such as a battery.

Pen device 150 also includes a light source or optical emitter 44 and a light sensor or optical detector 42 coupled to the processor 32. The optical emitter 44 may be a light emitting diode (LED), for example, and the optical detector 42 may be a charge coupled device (CCD) or complementary metal-oxide semiconductor (CMOS) imager array, for example. The optical emitter 44 illuminates surface 70 or a portion thereof. Light reflected from the surface 70 is received at and recorded by optical detector 42.

The surface 70 may be a sheet a paper, although the present invention is not so limited, For example, the surface 70 may be an LCD (liquid crystal display, CRT (cathode ray tube), touchscreen, or other similar type of active electronic surface (e.g., the display of a laptop or tablet PC). Similarly, the surface 70 can be a surface comprising electronic Ink, or a surface comprising reconfigurable paper.

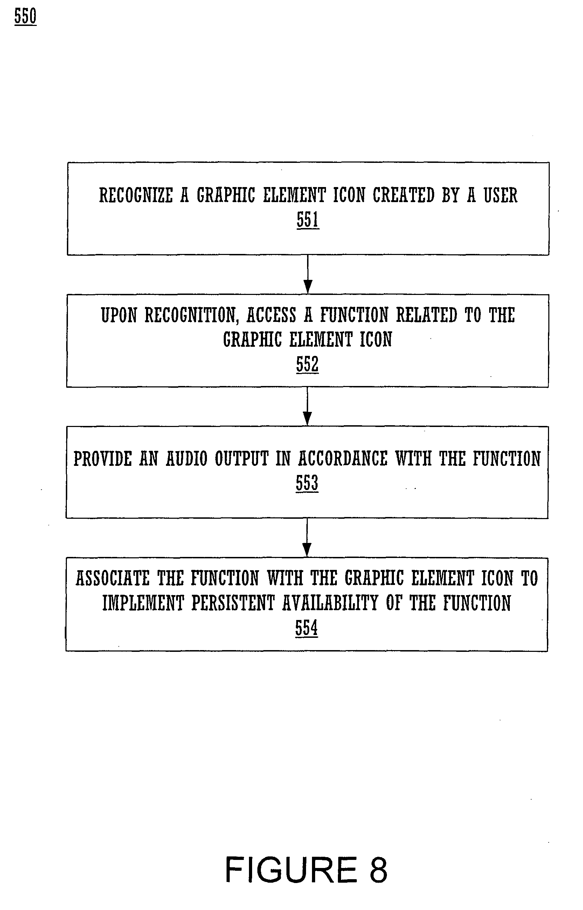

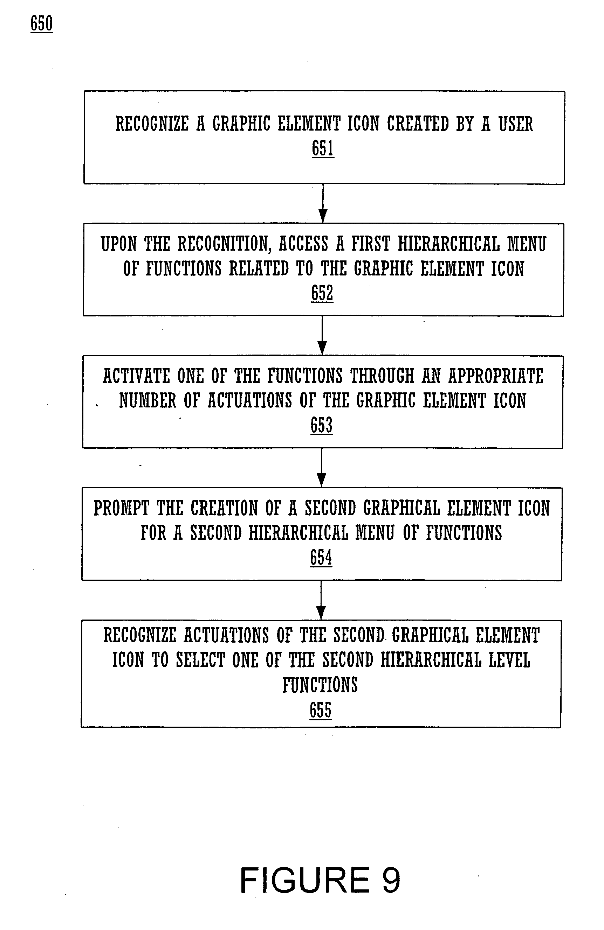

In one embodiment, a pattern of markings is printed on surface 70. The end of pen device 150 that holds optical emitter 44 and optical detector 42 is placed against or near surface 70. As pen device 150 is moved relative to the surface 70, the pattern of markings are read and recorded by optical emitter 44 and optical detector 42. As discussed In more detail above, In one embodiment, the markings on surface 70 are used to determine the position of pen device 150 relative to surface (see Figures 3 and 4). In another embodiment, the markings on surface 70 are used to encode information (see Figures 8 and 9). The captured images of surface 70 can be analyzed (processed) by pen device 150 to decode the markings and recover the encoded information.

Additional descriptions regarding surface markings for encoding information and the reading/recording of such markings by electronic devices can be found in the following patents and patent applications that are assigned to Anoto and that are all herein incorporated by reference in their entirety: U.S. Patent No. 6,502,756, U.S. Application No. 101179,966, filed on June 26, 2002, WO 01/95559, WO 01/71473, WO 01/75723, WO 01/26032, WO 01/75780, WO 01/01670, WO 01/75773, WO 01/71475, WO 10 00/73983, and WO 01116591.

Pen device 150 of Figure 6 also includes a memory unit 48 coupled to the processor 32. In one embodiment, memory unit 48 is a removable memory unit embodied as a memory cartridge or a memory card. In another embodiment, memory unit 48 includes random access (volatile) memory (RAM) and read-only (non-volatile) memory (ROM) for storing information and instructions for processor 32.

In the embodiment of Figure 6, pen device 150 includes a writing element 52 situated at the same end of pen device 150 as the optical detector 42 and the optical emitter 44. Writing element 52 can be, for example, a pen, pencil, marker or the like, and may or may not be retractable. In certain applications, writing element 52 is not needed. In other applications, a user can use writing element 52 to make marks (e.g., graphical elements or user-written selectable items) on surface 70, including characters such as letters, words, numbers, mathematical symbols and the like. These marks can be scanned (imaged) and interpreted by pen device 150 according to their position on the surface 70. The position of the user-produced marks can be determined using a pattern of marks that are printed on surface 70; refer to the discussion of Figures 3 and 4, above. In one embodiment, the user-produced markings can be interpreted by pen device 150 using optical character recognition (OCR) techniques that recognize handwritten characters.

As mentioned above, surface 70 may be any surface suitable on which to write, such as, for example, a sheet of paper, although surfaces consisting of materials other than paper may be used. Also, surface 70 may or may not be flat. For example, surface 70 may be embodied as the surface of a globe. Furthermore, surface 70 may be smaller or larger than a conventional (e,g., 8.5x11 inch) page of paper.

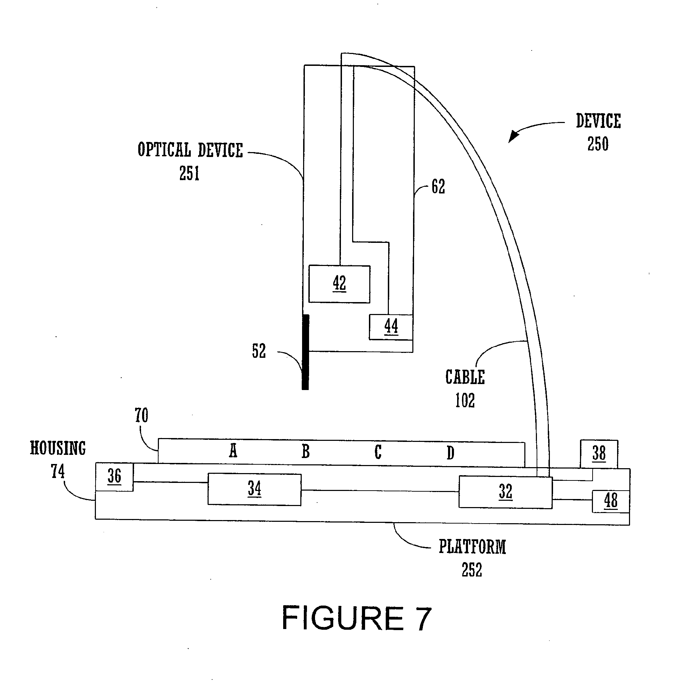

Figure 7 is a block diagram of another device 250 upon which embodiments of the present invention can be implemented. Device 250 includes processor 32, power source 34, audio output device 36, input buttons 38, memory unit 48, optical detector 42, optical emitter 44 and writing element 52, previously described herein. However, in the embodiment of Figure 7, optical detector 42, optical emitter 44 and writing element 52 are embodied as optical device 251 in housing 62, and processor 32, power source 34, audio output device 36, input buttons 38 and memory unit 48 are embodied as platform 202 In housing 74. In the present embodiment, optical device 251 is coupled to platform 252 by a cable 102; however, a wireless connection can be used instead. The elements illustrated by Figure 7 can be distributed between optical device 251 and platform 252 in combinations other than those described above.

With reference back to Figure 6, four positions or regions on surface 70 are indicated by the letters A, B, C and D (these characters are not printed on surface 70, but are used herein to indicate positions on surface 70). There may be many such regions on the surface 70. Associated with each region on surface 70 is a unique pattern of marks. The regions on surface 70 may overlap because even if some marks are shared between overlapping regions, the pattern of marks in a region is still unique to that region.

In the example of Figure 6, using pen device 150 (specifically, using writing element 52), a user may create a character consisting, for example, of a circled letter "M" at position A on surface 70 (generally, the user may create the character at any position on surface 70). The user may create such a character in response to a prompt (e.g., an audible prompt) from pen device 150. When the user creates the character, pen device 150 records the pattern of markings that are uniquely present at the position where the character is created. The pen device 150 associates that pattern of markings with the character just created. When pen device 150 is subsequently positioned over the circled "M," pen device 150 recognizes the pattern of marks associated therewith and recognizes the position as being associated with a circled "M." In effect, pen device 150 recognizes the character using the pattern of markings at the position where the character is located, rather than by recognizing the character itself.

In one embodiment, the characters described above comprise "graphic elements" that are associated with one or more commands of the pen device 150. It should be noted that such graphic elements that are associated with, and are used to access the pen device 150 implemented functions comprising commands, are referred to as "graphic element icons" hereafter in order to distinguish from other written characters, marks, etc. that are not associated with accessing functions or applications of the pen device 150. In the example just described, a user can create (write) a graphic element icon that identifies a particular command, and can invoke that command repeatedly by simply postponing pen device 150 over the graphic element icon (e.g., the written character). In one embodiment, the writing instrument is positioned over the graphical character. In other words, the user does not have to write the character for a command each time the command is to be invoked by the pen device 150; instead, the user can write the graphic element icon for a command one time and invoke the command repeatedly using the same written graphic element icon. This attribute is referred to as "persistence" and is described in greater detail below. This is also true regarding graphical element icons that are not user written but pre-printed on the surface and are nevertheless selectable by the pen device 150.

In one embodiment, the graphic element icons can include a letter or number with a line circumscribing the letter or number. The line circumscribing the letter or number may be a circle, oval, square, polygon, etc. Such graphic elements appear to be like "buttons" that can be selected by the user, instead of ordinary letters and numbers. By creating a graphic element icon of this kind, the user can visually distinguish graphic element icons such as functional icons from ordinary letters and numbers, which may be treated as data by the pen device 150. Also, by creating graphic element icons of this kind, the pen device may also be able to better distinguish functional or menu item type graphic elements from non-funcffonal or non-menu item type graphic elements. For instance, a user may create a graphic element icon that is the letter "M" which is enclosed by a circle to create an interactive "menu" graphic element icon.

The pen device 150 may be programmed to recognize an overlapping circle or square with the letter "M" in it as a functional graphic element as distinguished from the letter "M" in a word. The graphic element icon may also include a small "check mark" symbol adjacent thereto, within a certain distance (e.g., 1 Inch, 1.5 inches, etc.). The checkmark will be associated with the graphic element icon. Computer code for recognizing such functional graphic elements and distinguishing them from other non-functional graphic elements can reside in the memory unit in the pen device. The processor can recognize the graphic element icons and can identify the locations of those graphic element icons so that the pen device 150 can perform various functions, operations, and the like associated therewith. In these embodiments, the memory unit may comprise computer code for correlating any graphic elements produced by the user with their locations on the surface. The pen device 150 recognizes a "down-touch" or "down-stroke" or being placed down upon the surface (e.g., when the user begins writing) and recognizes an "up-stroke" or being picked up from the surface (e.g., when the user finishes writing). Such down-strokes and up-strokes can be interpreted by the pen device 150 as, for example, Indicators as to when certain functionality is invoked and what particular function/application is Invoked (e.g., triggering OCR processing). Particularly, a down-stroke quickly followed by an up-stroke (e.g., a tap of the pen device on the surface) can be associated with a special action depending upon the application (e.g., selecting a graphic element icon, text string, etc.).

It should be noted that the generic term "graphic element" may include any suitable marking created by the user (e.g., a user-written selectable item), and is distinguishable from a graphic element icon which refers to a functional graphic element that is used to access one or more functions of the device.

As mentioned above, it should be noted that graphic element icons can be created by the pen device 150 (e.g., drawn by the user) or can be pre-existing (e.g., a printed element on a sheet of paper). Example graphic elements include, but are not limited to symbols, indicia such as letters and/or numbers, characters, words, shapes, lines, etc. They can be regular or irregular in shape. User written/created graphic elements are typically created using the pen device 150. Additionally, graphic element icons usually, but not always, incorporate a circumscribing line (e.g., circle) around a character (e.g., the letter "M") to give them an added degree of distinctiveness to both the user and the pen device 150. For example, in one embodiment, an up-stroke after finishing a circle around the character can specifically indicate to the pen device 150 that the user has just created a graphic element icon.

Figure 8 shows a flowchart of the steps of a computer-implemented process 550 in accordance with one embodiment of the present Invention. Process 550 depicts the basic operating steps of a user interface process as implemented by a device (e.g., pen device 150) in accordance with one embodiment of the present invention as it interprets user input in the form of graphic elements, writing, marks, etc. and provides the requested functionality to the user.

Process 550 begins in step 551, where the computer-implemented functionality of the pen device 150 recognizes a created graphical element icon (e.g., created by a user). Alternatively, the graphic element may be preprinted on the surface and its location known to the pen device 150. At step 551, if the user is writing the graphic element for the first time, the pen device 150 is using the optical sensor and the processor to perform OCR (optical character recognition) on the writing to identify the user written graphical element. Its unique location on the surface is then also recorded, in one embodiment. In step 552, once recognized, a function related to the graphical element icon is accessed. This function can be, for example, a menu function that can enunciate (e.g., audibly render) a predetermined list of functions (e.g., menu choices or sub-menu options) for subsequent activation by the user. In step 553, an audio output in accordance with the function is provided. This audio output can be, for example, the enunciation of what particular choice the user is at within the list of choices. In step 554, the function is persistently associated with the graphical element icon, enabling a subsequent access of the function (e.g., at some later time) by a subsequent actuation (e.g., tapping with the pen device 150) of the graphical element icon. For example, in the case of a menu function, the listed menu choices can be subsequently accessed by the user at some later time by simply actuating the menu graphic element icon (e.g., tapping it).

It is appreciated that a plurality of different graphic elements may exist on the surface and anytime, and the selection thereof may provide various functions to be executed by the pen device 150, for example, to invoked applications, invoke sub-menu options, etc.

it should be noted that the output of the pen device 150 can be visual output (e.g., via a display, indicator lights, etc.) in addition to, or instead of, audio output. The visual output and/or audio output can come directly from the pen device 150, or can be from another device (e.g., personal computer, speaker, LCD display, etc.) communicatively coupled to the pen device 150.

In this manner, embodiments of the present invention implement a user interface means for navigating the functionality of a computer system, particularly the pen based computer system comprising, for example, the pen device 150. The user interface as implemented by the graphical element icons provides the method of interacting with a number of software applications that execute within the pen device 150. As described above, output from the pen device 150 may include audio output, and thus, the user interface means enables the user to carry on a "dialog" with the applications and functionality of the pen device 150. In other words, the user interface enables the user to create mutually recognized items such as graphic element icons that allow the user and the pen device 150 to interact with one another. As described above, the mutually recognized items are typically symbols or marks or icons that the user draws on a surface, typically a sheet of paper.

Different graphic element icons have different meaning and different manners of interaction with the user. Generally, for a given graphic element icon, the manner of interaction will call up different computer implemented functionality of the pen device. For illustration purposes, in the case of the menu example above, the menu functionality allows the user to iterate through a list of functions that are related to the graphic element (e.g., the number of taps on the menu graphic element icon iterates through a list of functions). Audio from the pen device can enunciate the function or mode as the taps are done. One of the enunciated functions/modes can then be selected by the user through some further interaction (e.g., drawing or selecting a previously drawn checkmark graphic element associated with the graphic element icon). Once selected, the functionality and options and further sub-menus of the particular selected function can then be accessed by the user. Alternatively, if one of the audibly rendered sub-options is itself a menu graphical icon, it can be selected by the user drawing its representation on the surface and selecting it.

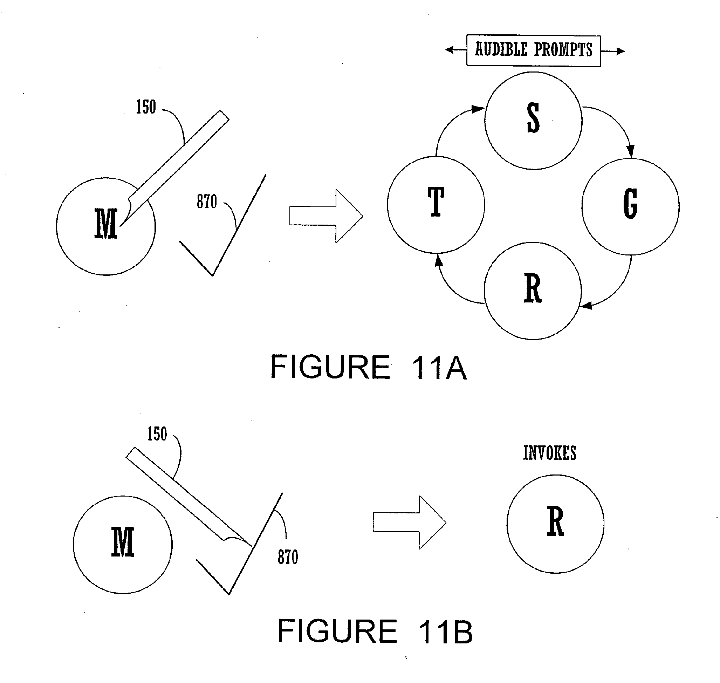

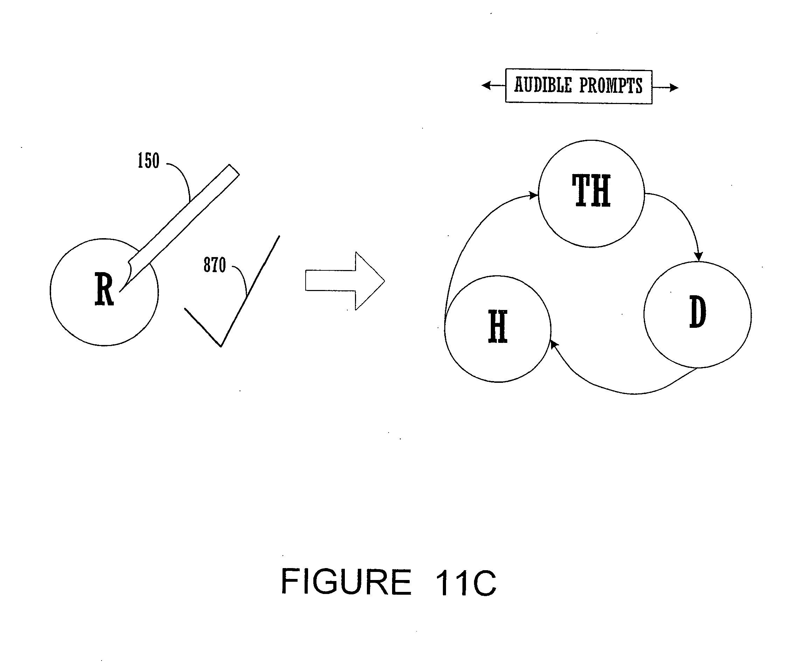

Figure 9 shows a flowchart of the computer implemented steps of a process 650 in accordance with one embodiment of the present invention. Process 650 depicts the basic operating steps of a user interface process for accessing (e.g., navigating through) a number of nested, hierarchical functions of an interactive device (e.g., pen device 150) in accordance with one embodiment of the present invention. Process 650 is described with reference to Figures 11A, 11B, and 11C.

Process 650 begins in step 651, where the computer implemented functionality of the pen device 150 recognizes a created graphic element icon, shown in figure 11A as a menu icon "M". Like step 551, the graphic element icon may be written by the user or preprinted on the surface. In one case, the graphic element icon can provide a list of choices of further graphic element icons (e.g., hierarchical arrangement) that are associated therewith and which themselves may provide further choices. In step 652, and as shown in Figure 11A, once recognized, a first hierarchical menu of functions related to the graphic element icon is accessed. In this example, once recognized, the menu icon "M" of step 651 causes a list of sub-options (e.g., system "S", games "G", reference "R", and tools "T") to be audibly rendered (e.g., via audible prompts), one option at a time, as shown in Figure 11A. The options are rendered in response to successive selections of the menu icon of step 651 by the pen device (e.g., pen device 150).

In step 653, and as illustrated in Figure 11B, one of the enunciated functions, in this example, the reference graphic element icon "R", is selected through an appropriate number of actuations of the menu graphic element icon (e.g., taps) and an actuation the associated checkmark icon 870. In step 654, the activated function may prompt the creation of a second graphic element icon for a second hierarchical menu of functions. The second graphic element icon, the reference icon "R" in this example, may then be drawn on the surface by the user. The selection thereof, as shown in Figure 11C, will cause a second listing of submenu items to be audibly rendered (e.g., via audible prompts) in the manner described above (e.g., Thesaurus "TH", dictionary "D", and help "H"). Subsequently in step 655, one of the enunciated functions of the second graphic element icon is activated through an appropriate number of actuations to select one of the second hierarchical level functions.

In this manner, one menu can invoke a number of sub-menus which themselves have even further sub-menus. Thus, different levels of graphic element icons can be hierarchically arranged. Generally, top-level graphic element icons which present menus of functions are referred to as group graphic element icons. Application graphic element icons are second-level graphic element icons that generally present menus of configuration options or application settings for a given application. For example, application graphic element icons can be considered as a special case of a group graphic element icon. Generally, an application graphic element icon has a specialized application related default behavior associated with it.

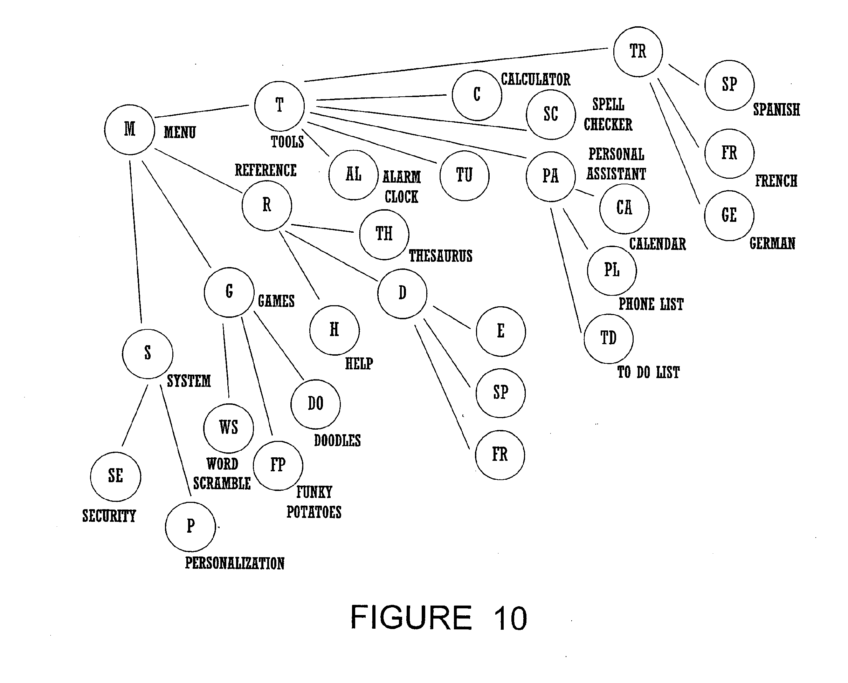

In this manner, the user may then select a menu item from the list of menu items. The menu items may include directory names, subdirectory names, application names, or names of specific data sets. Examples of directory or subdirectory names include, but are not limited to, "tools" (e.g., for interactive useful functions applicable under many different circumstances), "reference" (e.g., for reference materials such as dictionaries), "games" (e.g., for different games), etc. Examples of specific application (or subdirectory) names include "calculator", "spell checker", and "translator". Specific examples of data sets may include a set of foreign words and their definitions, a phone list, a calendar, a to-do list, etc. Additional examples of menu items are shown in Figure 10 below.

Specific audio instructions can be provided for the various menu items. For instance, after the user selects the "calculator" menu item, the pen device may instruct the user to draw the numbers 0-9, and the operators ±, -' x, /, and = on the sheet of paper and then select the numbers to perform a math calculation. In another example, after the user selects the "translator" menu item, the pen device can instruct the user to write the name of a second language and circle it. After the user does this, the pen device can further instruct the user to write down a word in English and then select the circled second language to hear the written word translated into the second language. After doing so, the audio output device in the pen device may recite the word in the second language.

Figure 10 shows a menu item tree directory according to an embodiment of the present invention including the graphical element icon representation of each option. The menu item tree directory can embody an audio menu starting from the menu graphic element icon. Starting from the top of Figure 10, a first audio subdirectory would be a tools T subdirectory. Under the tools T subdirectory, there could be a translator TR subdirectory, a calculator C subdirectory, a spell checker SC subdirectory, a personal assistant PA subdirectory, an alarm clock AL subdirectory, and a tutor TU function. Under the translator TR subdirectory, there would be Spanish SP, French FR, and German GE translator functions. Under the personal assistant PA subdirectory, there would be calendar C, phone list FL, and to do list TD functions or subdirectories. Under the reference R subdirectory, there could be thesaurus TH function, a dictionary D subdirectory, and a help H function. Under the dictionary D subdirectory, there can be an English E function, a Spanish SF function, and a French FR function. Under the games G subdirectory, there can be games such as word scramble WS, funky potatoes FP, and doodler DO. Other games could also be present in other embodiments of the Invention. Under the system S subdirectory, there can be a security SE function, and a personalization P function.

Details pertaining to some of the above directories, subdirectories, and functions are provided below. As illustrated by the menu item tree-directory, a user may proceed or navigate down any desired path by listening to recitations of the various menu items and then selecting the menu item desired. The subsequent selection of the desired menu item may occur in any suitable manner. For example, in some embodiments, a user can cause the pen device to scroll through the audio menu by "down touching" (e.g., down-stroke) on a created graphic element. The "down touching" may be recognized by the electronics in the pen device as an "actuation" by using any suitable mechanism. For instance, the pen device may be programmed to recognize the image change associated with the downward movement of It towards the selected graphic clement.

In another example, a pressure sensitive switch may be provided in the pen device so that when the end of the pen device applies pressure to the paper, the pressure switch activates. This Informs the pen device to scroll through the audio menu. For instance, after selecting the circled letter "M" with the pen device (to thereby cause the pressure switch in the pen device to activate), the audio output device in the pen device may recite "tools" and nothing more. The user may select the circled letter "M" a second time to cause the audio output device to recite the menu Item "reference". This can be repeated as often as desired to scroll through the audio menu. To select a particular menu item, the user can create a distinctive mark on the paper or provide a specific gesture with the scanning apparatus. For instance, the user may draw a "checkmark" (or other graphic element) next to the circled letter "M" after hearing the word "tools" to select the subdirectory "tools". Using a method such as this, a user may navigate towards the Intended directory, subdirectory, or function In the menu item tree. The creation of a different graphic element or a different gesture may be used to cause the pen device to scroll upward. Alternatively, buttons or other actuators may be provided in the pen device to scroll through the menu. Once "tools" is selected, it will function as described above, but with respect to its subdirectory menu.

In other embodiments, after creating the menu graphic element icon (e.g., letter "M" with a circle), the user may select the menu graphic element icon. Software in the scanning apparatus recognizes the circled letter as being the menu symbol and causes the scanning apparatus to recite the menu items "tools", "reference", "games", and "system" sequentially and at spaced timing Intervals, without down touching by the user. Audio instructions can be provided to the user. For example, the pen device may say "To select the 'tools' directory, write the letter 'T' and circle it." To select the menu item, the user may create the letter "T' and circle it. This indicates to the pen device that the user has selected the subdirectory "tools". Then, the pen device can recite the menu items under the "tools" directory for the user. Thus, it is possible to proceed directly to a particular directory, subdirectory, or function in the menu item tree by creating a graphic element representing that directory, subdirectory, or function on a sheet and interacting therewith. Alternatively, if the menu item already resides on the surface, the user can anytime interact with it to select its functions.

It should be noted that the order of items within the directories, subdirectories, option menus, etc. of the graphic element icons depicted in Figure 10 can be changed by the user. For example, the user can access a certain application and use that application to change the order in which the items of one or more directories, subdirectories, etc., are audibly rendered. Similarly, the user can change the specific audio output associated with one or more items within a given directory/subdirectory etc. for sample, the user can record her own voice for an item, use a prerecorded song (e.g., MP3, etc.), or the like, and user according as the item's audibly rendered output. Additionally, it should be noted that additional items for one or more directories, subdirectories, etc., can be added through, for example, software/or firmware updates provided to the pen device (e.g., uploading new software based functionality).

It should be noted that a respective state of multiple instances of a graphic element icon (e.g., multiple menu icons) can be persistently associated with each specific instance. For example, in a case where two or more graphic element icons exist on a common surface (e.g., created by the user, preprinted, or the like) their state, or their particular location within their directory of options can be remembered for each icon. For example, if a first menu icon is currently on option three (e.g., "games"), and a second menu icon is currently on option one (e.g., "tools"), the user can go off and perform other tasks using other applications (e.g., calculator, dictionary, etc.) and come back at some later time to either the first or second menu icon and they will correctly retain their last state (e.g., "games" for the first and "tools" for the second menu icon).

Similarly, it should be noted that a respective state of multiple instances of a graphic element icon (e.g., multiple menu icons) can be coordinated among the multiple instances and persistently associated with each specific instance. With coordinated state, where two or more graphic element icons exist on a common surface (e.g., created by the user, preprinted, or the like) their state can be remembered for each icon, but that state can be coordinated such that the options span across each instance. For example, if a first menu icon is currently on option two (e.g., "system"), a second menu icon will have its state coordinated such that it will be on option three (e.g., "tools"). The user can perform other Intervening tasks and come back at some later time to either the first or second menu icon and they will correctly retain their coordinated state (e.g., "system" for the first and "tools" for the second).

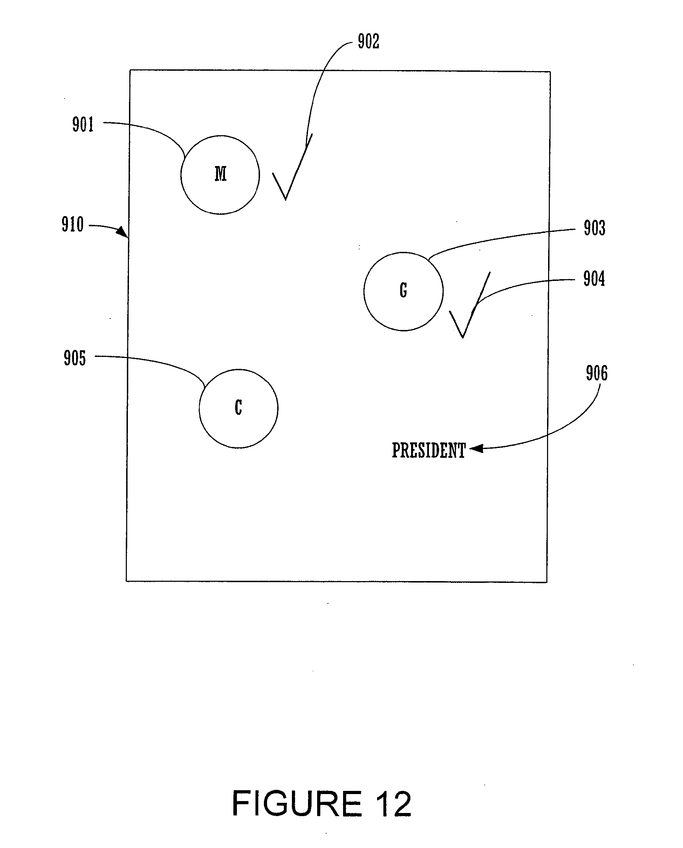

Figure 12 shows a surface 910 (e.g., a sheet of paper) having a number of graphic element icons written thereon in accordance with one embodiment of the present invention. Figure 12 shows examples of group graphic element icons (e.g., the menu icon "M" and the games icon "G") and an application icon (e.g., the calculator icon "C"). The graphic element Icons can be written on the sheet paper 910 by the user or can be preprinted. As described above, group graphic element icons generally audibly render a list options. For example, repeatedly tapping at location 901 with the pen device 150 proceeds through the options of the menu directory (e.g., system, games, reference, and tools), as described in the discussion Figure 10. For example, tapping twice on the menu icon will cause the pen device 150 to audibly render "system" and then audibly render "games" indicating the selection of the games subdirectory. The game subdirectory can then be activated by touching location 902 (e.g., the checkmark) and the activation can be confirmed to the user through an audio tone.

Subsequently, the pen device 150 audibly prompts the user to create (e.g. draw) a games graphic element icon as shown in Figure 12. Repeatedly tapping the games icon at location 903 with the pen device 160 then causes the pen device 150 to proceed through the options of the games subdirectory (e.g., word scramble, funky potatoes, and doodler), as described in the discussion Figure 10. A selected one of the game subdirectory items can then be selected through a tap at location 904 (e.g., the checkmark associated with the games), or alternatively, drawing the checkmark if it is not already there.

Referring still to Figure 12, a touch at the calculator icon "C" launches the calculator application. In this manner, the calculator icon does not render a list of menu items or subdirectory options, but rather directly launches an application itself, in this case the calculator application. Once the calculator application is invoked, the pen device 150 confirms the activation (e.g., by rendering an audio tone) and audibly prompts the user through a series of actions to prepare the calculator for use (e.g., by instructing the user to draw the numbers 0-9, and the operators ±, -, x, /, and = on the surface and then select the numbers to perform a math calculation).

Importantly, in the above examples, it should be noted that an OCR (optical character recognition) process needs to be performed on a mark, single character (e.g., the letter "M"), or a text string (e.g., a word) only once, as it is first written by the user (e.g., "M" shown in Figure 12). As described above, the pen device 150 includes functionality whereby the location of the graphic elements on the surface 910 can be determined by the pen device 150 reading data encoded on the surface 910. This enables the pen device 150 to remember the location of the particular character, particular symbol, particular text string, etc. The pen device 150 can thus identify subsequent selections of a particular word by recognizing the same location of the particular word on a surface (e.g., when the user touches the pen device 150 onto the particular word at some later time). Upon subsequent selections of the word by the user, the results of the earlier performed OCR process are recalled, and these results are used by, for example, an active application (e.g., dictionary). Thus, the ability to store results of an OCR process (e.g., on words, characters, numbers, etc.), and to subsequently recall those results for use with one or more applications at a later time, greatly improves the responsiveness and the performance of the user interface implemented by embodiments of the present invention. Resource intensive OCR processing need only be performed once by the computer system resources of the pen device 150.

Figure 12 also shows a user written word 906 (e.g., text string) created using a "prompts and believe" function of the pen device 150. in accordance with embodiments of the present invention, it should be noted that some words, text strings, marks, symbols, or other graphic elements, need not be processed at all using OCR. For example, the particular word, graphic element, etc., can be created by the user in response to an audible prompt from the pen device 150, wherein the pen device prompts the user to write the particular word (e.g., "president") and subsequently stores the location of the written word with the association (e.g., from the prompt). The subsequent selection of the created word is recognized by location in the manner described above. For example, pen device 150 can instruct the user to write the word "president" 906. in response to the prompt, the user writes the word "president" and the pen device 150 will treat, or in other words believe, upon a subsequent selection of the word that what the user wrote in response to the prompt was in fact the word "president." Depending upon the application, the user can be prompted to underline the word, put a box around the word, or otherwise and some distinguishing mark/graphic element.

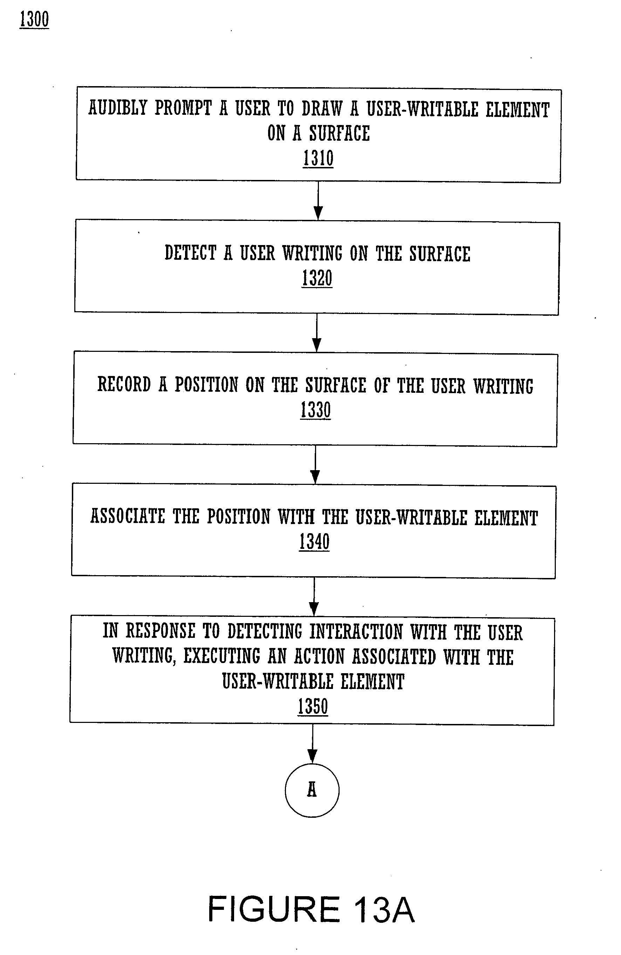

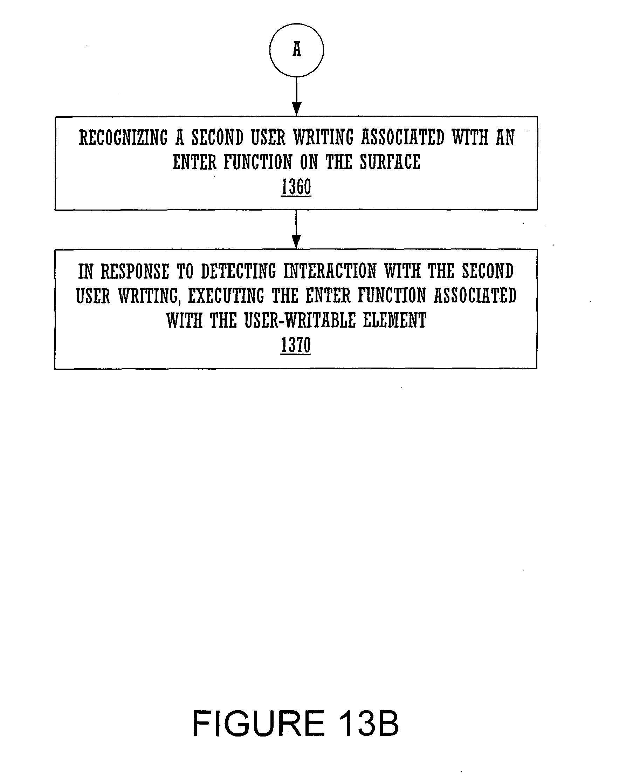

Figures 13A and 13B show a flowchart of a computer-implemented process 1300 for associating a user writing with a user-writable element in accordance with one embodiment of the present invention. In one embodiment, process 1300 depicts the basic operating steps of a process for associating a user writing with a user writable element as implemented by a device (e.g., interactive device 100 of Figure 1) In accordance with one embodiment of the present invention. Although specific steps are disclosed in process 1300, such steps are exemplary. That is, the embodiments of the present invention are well suited to performing various other steps or variations of the steps recited in Figures 13A and 13B.

At step 1310 of process 1300, a user is audibly prompted to draw a user-writable element on a surface. In one embodiment, processor 112 of Figure 1 directs audio output device 116 to audibly render the audible prompt. It should be appreciated that the audible prompt may be rendered in conjunction with a particular application. For example, a user within the calculator function may be prompted to draw the number "1." In another example, within an educational application the user may be prompted to draw various images, such as a flag, a log cabin, and a top hat. It should be appreciated that the user-writable element may Include, but is not limited to, a text string, a word, a symbol, a graphic element, an image, or any other user drawn item.

In one embodiment, the user is audibly prompted to draw the user-writable element within a particular region of the surface. For example, the user may be prompted to draw the word "north" near the top of a sheet of paper (e.g., the surface) and the draw the word "south" near the bottom of the sheet of paper.

In one embodiment, when the user is done writing the user writing, the interactive device 100 recognizes the fact that the user is finished by, for example, recognizing the inactivity (e.g., the user is no longer writing) as a data entry termination event. In this manner, a "timeout" mechanism can be used to recognize the end of data entry. Another termination event could be a user completing the circle around the letter or letters. Additional examples of termination events are described in the commonly assigned U.S. Patent Application, Attorney Docket No. LEAP-P0320, Application No. 11/035,003 filed January 12,2005, by James Marggraff et al., entitled "TERMINATION EVENTS," which is incorporated herein in its entirety.

At step 1320, a user writing is detected on the surface. In one embodiment, the user writing is detected using optical detector 120 in conjunction with processor 112 of Figure 1. It should be appreciated that only the presence of a user writing is detected, and that the user writing is not processed or recognized. In other words, there is no verification that the user writing Is the user-writable element. In particular, the user writing is not subjected to an OCR operation. In one embodiment, a user writing is determined as being responsive to the audible prompt if the user writing is the first writing immediately following the audible prompt.

At step 1330, a position of the user writing on the surface is recorded. In one embodiment, the surface is provided with a coding pattern in the form of optically readable position code that consists of a pattern of marks, as described above in conjunction with Figures 3 and 4. Using the optically readable position code, an optical detector (e.g., optical detector 120 of Figure 1) is operable to read and record the position of the user writing.

At step 1340, the position is associated with the user-writable element. In other words, the functionality of the user-writable element as prompted is associated with the user writing at the recorded position without verifying that the user writing is actually the user-writable element. For example, a user prompted to write the word "north" may actually write the letter "N." The user writing, e.g., the letter "N," is associated with the user-writable element, e.g., the word "north." In particular, the interactive device (e.g., interactive device 100 of Figure 1) does not perform any recognition of the user writing, in essence, the user is prompted to draw a particular item and the interactive device believes that the particular item has been written, regardless of what actually has been written. The position of the user writing is associated with the prompted user-writable element. Thus, any interaction with the user writing is performed in accordance with an interaction with the user-writable element.

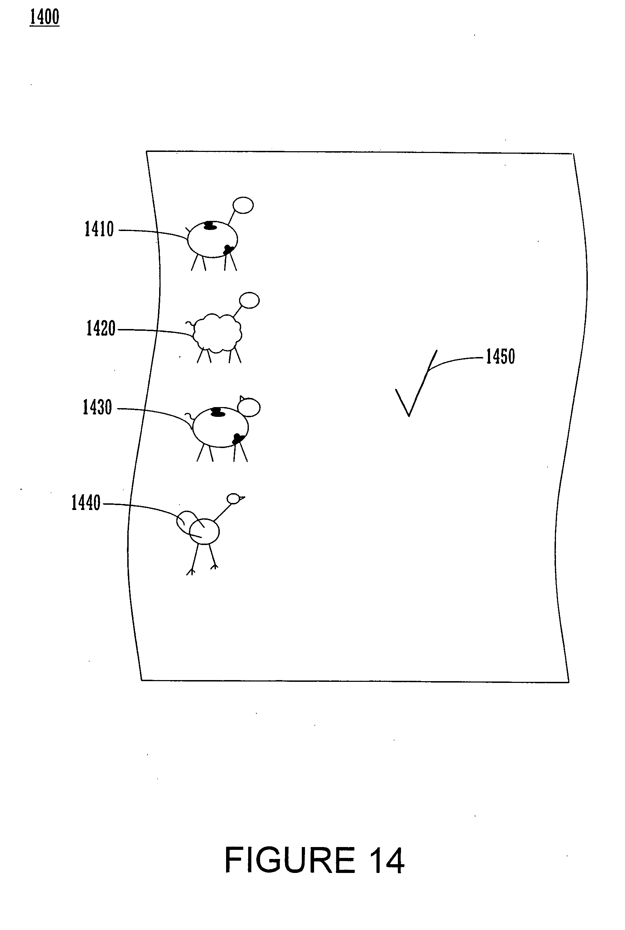

Figure 14 illustrates a surface 1400 (e.g., a sheet of paper) having a number of user writings written thereon in accordance with one embodiment of the present invention. For example, a user is prompted to draw a cow. The user draws user writing 1410 in response to the prompt. The interactive device associates the position of user writing 1410 with a cow. The interactive device does not verify that user writing 1410 is actually a cow.

With reference to Figure 13A, at step 1350, in one embodiment, in response to detecting interaction with the user writing, an action associated with the user-writable element is executed. In one embodiment, the interaction includes a writing element contacting the user writing at the location. For example, where there are multiple user writings associated with numbers and operations of a calculator function, a user interacting with a user writing associated with the addition function would execute the addition function. In another example, an application may prompt a user with a question such as "what direction does the top point of a compass indicate?" A user Interacting with the user writing associated with the user-writable element "north" would effectuate a prompt indicating the user selected the correct response. Similarly, a user interacting with any other user writing would effectuate a prompt indicating the user selected an incorrect response. Moreover, a user interacting with different incorrect user writings representing different user-writable elements may effectuate different prompts from the interactive device. For example, a user interacting with the user writing associated with the user-writable element "south" might effectuate a prompt such as "you are close, but try the opposite direction," while a user interacting with a user writing associated with a user-writable element associated with a dog might effectuate a prompt such, as "that's not even a direction, try again."

With reference again to Figure 14, user writings 1410 through 1440 are included within an animal learning application. For example, a user interacting with user writings 1410 through 1440 may be prompted with sounds that the animals make. Interacting with user writing 1410 may cause the sound "moo" to be audibly rendered. Similarly, animals sounds associated with user writing 1420 (e.g., a sheep), user writing 1430 (e.g., a pig), and user writing 1440 (e.g., a bird) may be rendered in response to Interactions with the respective user writings.

With reference to Figure 138, at step 1360, in one embodiment, a second user writing associated with an enter function is recognized on the surface. In one embodiment, the second user writing is a checkmark. The enter function provides additional functionality for the application in which the user writing has been drawn. In one embodiment, the interactive device may take one action when the user writing is selected (e.g., interacted with) and may perform an enter type function when the associated second user writing is selected. For example, the enter type function may indicate the acceptance of data, the selection of data, or the selection of a command.

At step 1370, in one embodiment, in response to detecting Interaction with the second user writing, an enter function associated with the user-writable element is executed. As described above at step 1360, an enter function provides additional functionality for an application.

Figure 14 Illustrates user writings 1410 through 1440 associated with an animal learning application are shown. Checkmark 1450 provides an enter type function for the animal learning application. For example, a user may select (e.g., interact with) user writing 1420 and user writing 1440, and then select checkmark 1450. These user interactions may resuit in the interactive device audibly rendering a sheep's bleat associated with user writing 1420 and a bird's tweet associated with user writing 1440. The enter function allows the user to select a subset of the user writings and to provide information (e.g., animal sounds) associated to the selected user writings.

In this manner, the prompt-and-believe feature of embodiments of the present invention enables the creation of graphic elements having meanings that are mutually understood between the user and the pen device 150. Importantly, it should be understood that there is no OCR processing being done on the word president. Graphic elements created using the "prompt-and-believe" function can be associated with other applications, options, menus, functions etc., whereby selection of the prompt-and-balleve graphic element (e.g. by tapping) can invoke any of the above. Eliminating the requirement for any OCR processing lowers the computational demands on the pen device 150 and thus improves the responsiveness of the user Interface.

Although embodiments of the present invention have been described in the context of using surfaces encoded with markings in order to determine location of the pen device, it should be noted that embodiments of the present invention are suitable for use with pen devices that determine location using other means that do not require encoded surfaces. For example, in one embodiment, a pen device can incorporate one or more position location mechanisms such as, for example, motion sensors, gyroscopes, etc., and be configured to accurately store a precise location of a given surface (e.g., a sheet of paper). The precise location of the surface can be stored by, for example, sequentially touching opposite corners of the surface (e.g., a rectangular sheet of paper). The pen device would then recognize the location of graphic elements written by the user on the surface by comparing the stored precise location of the surface with the results of its location determination means.

Various embodiments of the invention, a method for associating a user writing with a user-writable element, are thus described. While the present invention has been described in particular embodiments, it should be appreciated that the invention should not be construed as limited by such embodiments, but rather construed according to the below claims.

## Claims

1. A method for associating a user writing with a user-writable element, said method comprising:
audibly prompting a user to draw a user-writable element on a surface;
detecting a user writing on said surface;
recording a position of said user writing on said surface; and
associating said position with said user-writable element.

2. A computer-usable medium having computer-readable program code embodied therein for causing a computer system to perform a method for associating a user writing with a user-writable element, said method comprising:
the steps of claim 1.

3. The method or medium as recited in Claim 1 or 2 wherein said detecting said user writing on said surface is performed without processing said user writing.

4. The method or medium as recited in Claim 1 or 2 further comprising, in response to detecting interaction with said user writing, wherein said interaction comprises a writing element contacting said user writing at said location, executing an action associated with said user-writable element.

5. The method or medium as recited in Claim 1 or 2 wherein said user-writable element is at least one of a text string; a word; a symbol; a graphic element.

6. The method of Claim 1 wherein in said detecting step, said detection occurs in response to said audibly prompting and without verifying that said user writing is said user-writable element; and in response to detecting interaction with said user writing, wherein said interaction comprises a writing element contacting said user writing at said location, executing an action associated with said user-writable element.

7. The method or medium as recited in Claim 1, 2 or 6 further comprising:
recognizing a second user writing associated with an enter function on said surface; and
in response to detecting interaction with said second user writing, executing an enter function associated with said user-writable element.

8. The method or medium as recited in Claim 1, 2 or 6 wherein said audibly prompting said user to draw said user-writable element on said surface comprises audibly prompting said user to draw said user-writable element within a particular region of said surface.

9. The method or medium as recited in Claim 1, 2 or 7 wherein said second user writing comprises a check mark.

10. An interactive device comprising:
a bus;
an audio output device coupled to said bus;
a user writing element for allowing a user to write on a writable surface;
an optical detector coupled to said bus for detecting positions of said user writing element with respect to said writable surface;
a processor coupled to said bus; and
a memory unit coupled to said bus, said memory storing instructions that when executed cause said processor to implement a method for associating a user writing with a user-writable element, said method comprising:
audibly prompting a user to draw a user-writable element on a surface;
detecting a user writing on said surface;
recording a position of said user writing on said surface; and
associating said position with said user-writable element.

11. The interactive device as recited in Claim 10 wherein said detecting said user writing on said surface is performed without processing said user writing.

12. The interactive device as recited in Claim 10 wherein said method further comprises, in response to detecting interaction with said user writing, wherein said interaction comprises a writing element contacting said user writing at said location, executing an action associated with said user-writable element.

13. The interactive device as recited in Claim 10 wherein said method further comprises:
recognizing a second user writing associated with an enter function on said surface; and
in response to detecting interaction with said second user writing, executing an enter function associated with said user-writable element.

14. The interactive device as recited in Claim 13 wherein said second user writing comprises a check mark.

15. The interactive device as recited in Claim 10 wherein said audibly prompting said user to draw said user-writable element on said surface comprises audibly prompting said user to draw said user-writable element within a particular region of said surface.

16. The interactive device as recited in Claim 10 wherein said user-writable element is at least one of a text string; a word; a symbol; a graphic element.
